# EUROPÄISCHE PATENTSCHRIFT

(11) **EP 1 108 639 B1**
(45) Veröffentlichungstag und Bekanntmachung des Hinweises auf die Patenterteilung: **12.11.2003**
(21) Anmeldenummer: 00127395.2
(22) Anmeldetag: 14.12.2000
(51) Int. Cl.: B62D 21/20

(54) **Fahrgestell für einen Fahrzeuganhänger**
Trailer frame
Châssis pour remorque

(30) Priorität: 17.12.1999 DE 29922270 U
(43) Veröffentlichungstag der Anmeldung: 20.06.2001
(73) Patentinhaber: AL-KO KOBER AG, D-89359 Kötz (DE)
(72) Erfinder: Wöhrle, Rudolf, 89335 Ichenhausen/Rieden (DE); Werdich, Anton, 89346 Bibertal/Anhofen (DE); Böller, Josef, 86476 Neuburg-Wattenweiler (DE)
(74) Vertreter: Ernicke, Hans-Dieter, Dipl.-Ing.

(56) Entgegenhaltungen:
- EP-A- 0 155 874
- DE-A- 3 102 683
- DE-A- 19 828 285
- DE-U- 7 907 112
- DE-U- 29 701 657
- US-A- 3 100 653

## Beschreibung

Die Erfindung betrifft ein Fahrgestell für einen Fahrzeuganhänger mit den Merkmalen im Hauptanspruch.

Die DE-297 01 657 U1 zeigt ein traversenfreies Fahrgestell für einen Fahrzeuganhänger mit einer V-Deichsel, deren Deichselholme einstückig in anschließende Längsholme übergehen, welche ein Achsaggregat tragen. An den Deichselholmen und den Längsholmen sind Verstellraster mit Schraubregistern zur variablen und längenveränderlichen Befestigung von Anhängerstützen und Beschlägen für die Befestigung des Aufbaus'vorhanden.

Die DE-91 03 811 U1 zeigt ein ähnliches Fahrgestell, bei dem zusätzlich das Achsaggregat verstellbar und längsverschieblich an den Längsholmen befestigt ist. Die Längsholme haben an den Enden Holmverlängerungen. Durch die hier ebenfalls vorhandenen Verstellraster und Schraubregister können der Aufbau und das Achsaggregat in ihrer Lage am Fahrgestell verändert werden.

Die DE-198 28 285 A1 offenbart ebenfalls ein Fahrgestell mit einem längsverstellbaren Achsaggregat, wobei zusätzlich ein längs verstellbares Heckteil vorhanden ist, das an den Enden der Längsholme mittels Verstellraster und Schraubregister befestigt werden kann. Das Fahrgestell lässt sich hierdurch an unterschiedliche Aufbaulängen anpassen. Die Längsholme und die Deichsel sind einteilig ausgebildet sind und lassen sich nicht gegenseitig in der Länge verstellen. Im Bereich am Deichselübergang ist eine das Gewicht steigernde Quertraverse vorhanden.

Aus der DE-75 34 344 U ist eine andere Variante eines Anhängerfahrgestells bekannt, welches geteilte Längsholme mit daran befestigten Achsböcken und einer starren V-Deichsel zeigt. Das Fahrgestell besitzt vorn und hinten Gewicht steigernde Traversen oder Querträger. Die Deichsel ist starr mit den Längsholmen verbunden, wobei das Fahrgestell weder im vorderen Deichselbereich, noch im Heckbereich eine Verstellmöglichkeit aufweist. Die Längsholme und die Deichsel haben eine über die Länge veränderliche Steghöhe, um einen Träger gleicher Biegefestigkeit zu realisieren.

Ein Anhängerfahrgestell mit Quertraversen nach den Oberbegriff des Anspruchs 1 ist auch der DE-79 07 112 U1 zu entnehmen. Die Quertraversen sind am vorderen und hinteren Ende der Längsholme des Fahrgestells angeordnet und können gegenüber den Längsholmen über eine lösbare Schraubenverbindung axial verstellt werden. Die einteilig ausgebildeten Längsholme sind mit einer v-förmigen Deichsel starr und ohne Längenverstellbarkeit verbunden. Die Anordnung wird durch die vordere Quertraverse stabilisiert, welche außer mit den beiden Längsholmen auch mit den Deichselholmen durch Schrauben verbunden ist. Die Quertraversen sind hierdurch unverzichtbare Bestandteile des Fahrgestells.

Ein ähnliches Fahrgestell mit mehreren verstellbaren Quertraversen ist aus der DE-31 02 683 A1 bekannt. Die v-förmige Deichsel ist mit zwei einstückig ausgebildeten Längsholmen starr und ohne Längenverstellbarkeit verschraubt. Verstellbar sind nur die Quertraversen, die für die Stabilisierung des Fahrgestells erforderlich sind.

Die DE-78 29 795 U offenbart eine weitere Variante eines Anhängerfahrgestells mit einer V-Deichsel, die über eine Gelenkverbindung mit dem von Längsholmen gebildeten Mittelteil verbunden ist. Das Fahrgestell besitzt keine Verlängerungsmöglichkeiten im Deichsel- und Heckbereich. Die Längsholme sind mit einer veränderlichen Steghöhe als biegegünstiger Träger ausgebildet. Die Deichsel hat eine einseitig zunehmende Keilform der Vertikalstege.

Bei Fahrgestellen für Fahrzeuganhänger spielen verschiedene Probleme eine Rolle. Zum einen muss von veränderten Vorgaben der Zugfahrzeuge her bei den Fahrzeuganhängern Gewicht gespart werden, wobei jedoch die Nutzlasten möglichst groß bleiben sollen. Dies ist vor allem bei Wohnwagenanhängern ein besonderes Thema, weil hier zugleich auch die Ansprüche der Nutzer an Komfort und Innenausstattung steigen, was sogar zu einem Ruf nach erhöhten Nutzlasten führt. Letztlich muss Gewicht am Fahrgestell gespart werden. Zugleich werden jedoch die Losgrößen für die Hersteller der Anhängerfahrgestelle immer kleiner, was zu einer Verkleinerung der Baureihen und zu einer Verringerung der Umrüst- und Herstellungskosten zwingt. Hieraus ergibt sich die Forderung nach einem verstellbaren Einheitsfahrgestell, das auch unterschiedliche Achslasten gestattet. Die vorbekannten traversenfreien Fahrgestelle zeigen schon Lösungsansätze in dieser Richtung. Mit Gewichtsreduzierungen und einer gewissen Variabilität hinsichtlich Fahrgestelllänge und Achsposition, wobei auch Veränderungsmöglichkeiten für Größe und Position des Aufbaus gegeben sind. Die vorbekannten Fahrgestelle können die gestellten Forderungen aber noch nicht optimal erfüllen.

Es ist daher Aufgabe der vorliegenden Erfindung, ein besseres Fahrgestell aufzuzeigen, das sowohl den Anforderungen an die Verstellbarkeit, wie auch an die Gewichtsreduzierung stärker gerecht wird.

Die Erfindung löst diese Aufgabe mit den Merkmalen im Hauptanspruch.
Das erfindungsgemäße Fahrgestell ist als einverstellbares Einheits-Fahrgestell ausgebildet, das im wesentlichen aus drei hintereinander angeordnete und miteinander verstellbar verbundenen Gruppen besteht, nämlich einer V-Deichsel, einem Mittelteil mit einem Achsaggregat und einem Heckteil. Verstellmöglichkeiten sind an den Verbindungsstellen zwischen Deichsel und Mittelteil einerseits und zwischen Mittelteil und Heckteil andererseits gegeben. Hierdurch lässt sich einerseits die Fahrgestelllänge beliebig variieren, wobei außerdem der Deichselüberhang konstant gehalten werden kann.

Außerdem lässt sich das Fahrgestell an unterschiedliche Achslasten und unterschiedliche Aufbauschwerpunkte sowie Gewichtsverteilungen anpassen. Dies geschieht durch eine Verschiebung des Mittelteils mit dem vorzugsweise starr daran angeordneten Achsaggregat nach vorn oder hinten gegenüber der Deichsel und dem Heckteil. Um bei diesem Fahrgestell die Gewichtseinsparung weiter zu verbessern, haben sowohl die Holme des Mittelteils wie auch die Deichselholme über ihre Länge eine variable Steghöhe, die sich jeweils zu beiden Enden hin verjüngt. Durch die endseitigen Verjüngungen kann erheblich Material gespart werden. Außerdem kann das Fahrgestell trotz der großen Verstellmöglichkeiten besonders biegegünstig gestaltet werden. Das erfindungsgemäße Fahrgestell gestattet eine noch stärkere Verringerung der Zahl an Baureihen und dabei eine noch stärkere Reduzierung der Kosten und eine Steigerung der Losgrößen.

Weitere Gewichtsreduzierungen des Fahrgestells lassen sich durch eine Verdünnung der Bodenplatte erreichen, wobei zu deren Stabilisierung an der Unterseite ein oder mehrere längs und/oder quer verlaufende leichtgewichtige Bodenversteifungen angeordnet sind. Bodenversteifungen befinden sich vor allem im Gehbereich der Bodenplatte und sind zwischen den Holmen des Fahrgestells angeordnet. Das Fahrgestell selbst verzichtet aus Gewichtsgründen auf Traversen. Die Bodenversteifungen sind wesentlich leichter als die Traversen und lassen sich insbesondere in einer Gestaltung als hohles Formteil auf sehr andere Zwecke nutzen.

Einerseits kann ein solches Formteil zugleich ein Funktionsteil darstellen, beispielsweise einen Tank an der Bodenunterseite. Ansonsten kann das Formteil auch mit einem leichtgewichtigen Schaumstoff gefüllt sein und neben der Stabilisierung noch für eine Wärmeisolierung der Bodenplatte sorgen. Für eine hohe Versteifungswirkung und eine optimale Aufnahme der Biegekräfte ist es günstig, wenn das Formteil zumindest an den Rändern besonders innig und linienförmig oder flächig mit der Bodenplatte verbunden ist. Auch der Schaumstoff kann sich hierbei günstig auswirken.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 und 2:: ein Anhängerfahrgestell in Seitenansicht mit verschiedenen Fahrgestelllängen und Aufbaulängen,
- Figur 3 bis 4:: Verstellmöglichkeiten für die Achsposition des Fahrgestells von Figur 1 und 2 bei gleichbleibender Fahrgestell- und Aufbaulänge,
- Figur 6 und 7:: zwei Varianten des Fahrgestells mit unterschiedlichen Steghöhen,
- Figur 8:: ein Querschnitt durch das Fahrgestell nebst Bodenplatte und Aufbau im Achsbereich,
- Figur 9:: eine Draufsicht auf ein Fahrgestell mit Bodenplatte und Bodenversteifungen,
- Figur 10:: eine Seitenansicht der Bodenplatte von Figur 9 in Pfeilrichtung X gesehen,
- Figur 11 und 12:: Varianten der Bodenplatte und der Bodenversteifung in Draufsicht und Seitenansicht gemäß Pfeil XII und
- Figur 13 bis 15:: eine weitere Variante der Bodenversteifung in Draufsicht und Seitenansicht gemäß Pfeil XIV und eine vergrößerte Detaildarstellung des Ausschnitts XV.

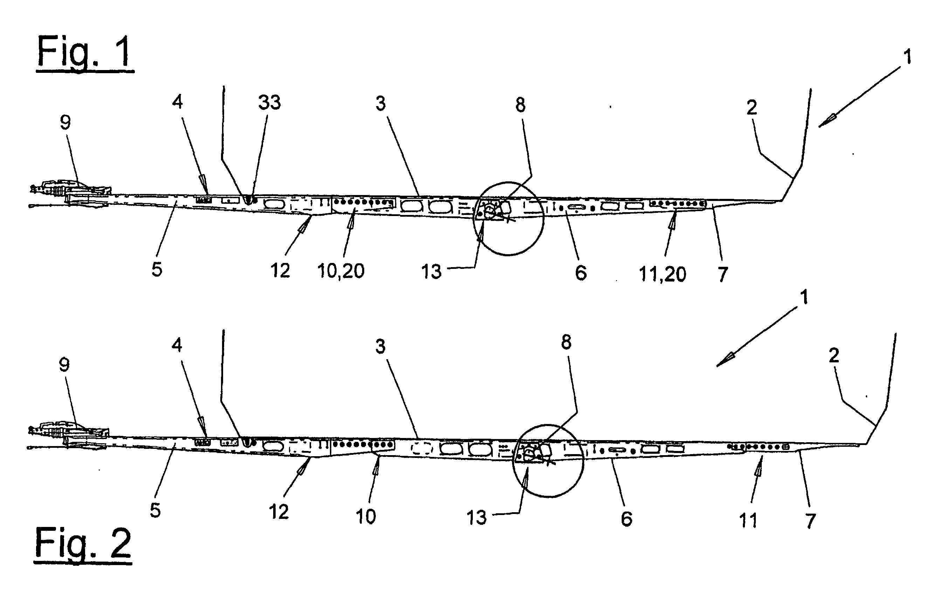

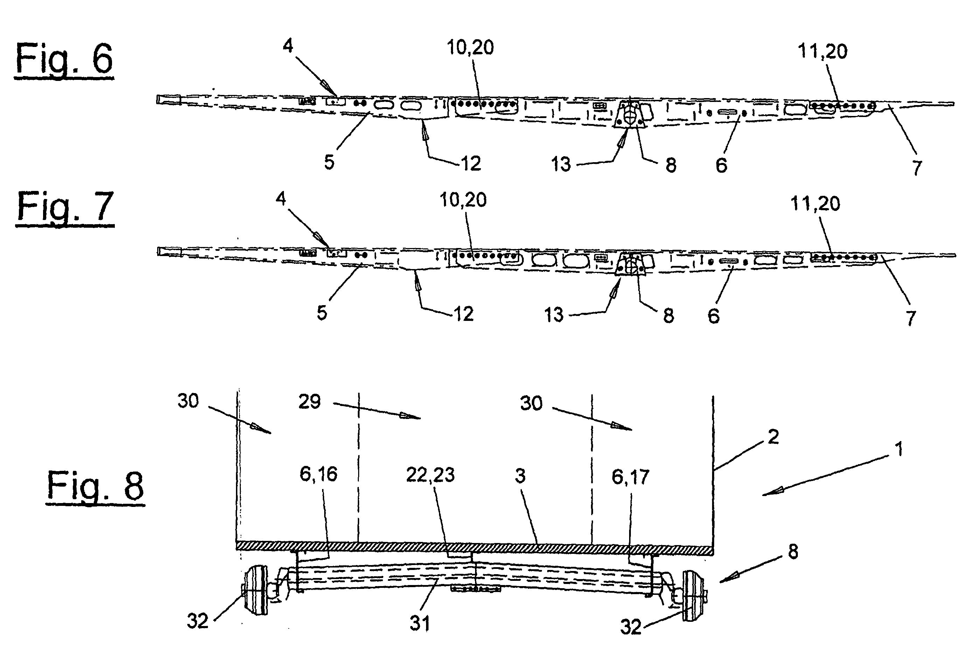

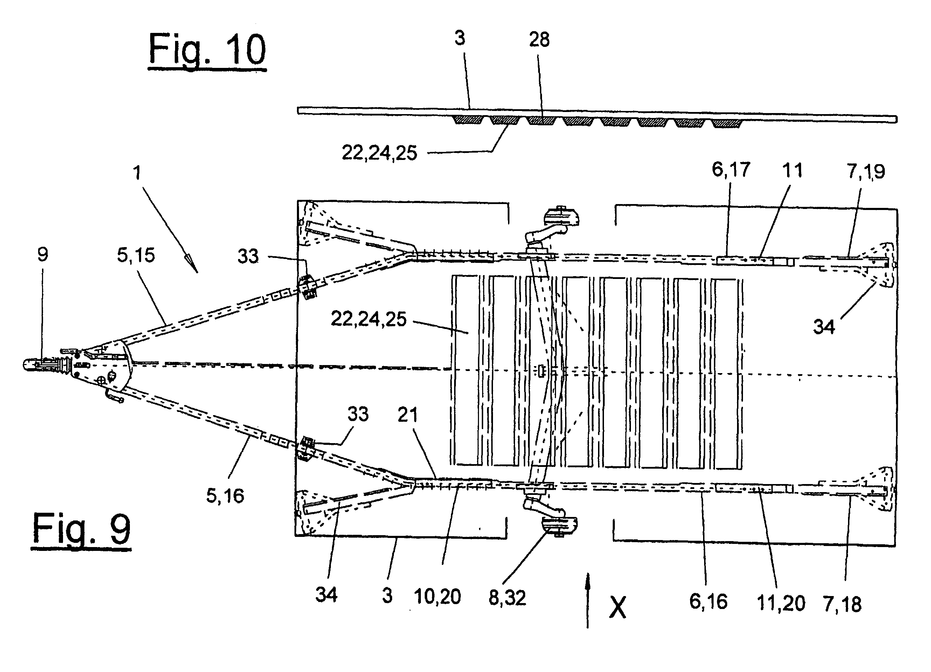

Figur 1 bis 7 zeigen ein Fahrgestell (4) für einen Fahrzeuganhänger (1) in Seitenansicht. Draufsichten sind in Figur 9, 11 und 13 zu sehen. Figur 8 zeigt einen Querschnitt.

Der Fahrzeuganhänger (1) besitzt einen Aufbau (2), der auf einer Bodenplatte (3) aufsitzt, die auf der Oberseite des Fahrgestells (4) aufliegt und mit diesem über geeignete Beschläge (33) oder dergleichen verbindbar ist. Der Aufbau (2) kann in unterschiedlicher Weise beliebig gestaltet sein. Vorzugsweise handelt es sich um einen Wohnwagenaufbau. Alternativ sind Aufbauten (2) auch in Form von Kastenaufbauten, Pritschen oder dergleichen möglich.

Das Fahrgestell (4) besteht aus drei Grundkomponenten oder Fahrzeugteilen, nämlich einer starren V-förmigen Deichsel (5), einem daran anschließenden Mittelteil (6) und einem daran wiederum anschließenden Heckteil (7).

Die Deichsel (5) besitzt zwei V-förmig angestellte Deichselholme (14,15), die am Vorderende miteinander verbunden sind und einen Zugkopf (9) tragen. Dieser beinhaltet in üblicher Weise eine Anhängerkupplung, die ggf. mit einer Auflaufbremse und einer Handbremse ausgestattet ist. Außerdem können ein Stützrad und dergleichen andere Teile am Zugkopf (9) angeordnet sein.

Das Mittelteil (6) besteht aus zwei vorzugsweise parallel und längs verlaufenden Mittelholmen (16,17), an denen auch das Achsaggregat (8) vorzugsweise starr und ortsfest befestigbar ist. Das Achsaggregat (8) kann als Einzeloder Tandemachse ausgebildet sein und ein oder zwei Achsen (31) aufweisen, die vorzugsweise eine Pfeilform besitzen und mit einer Gummi- oder Drehstabfederung ausgerüstet sind. Die Achsen (31) können über geeignete Achsschilde an den Mittelholmen (16,17) befestigt werden. An den Achsstummeln sind über Längs- oder Schräglenker die Radnaben (32) und die Radbremsen angeordnet. Die Achsgestaltung und die Federung können beliebig variieren.

Das Heckteil (7) besteht ebenfalls aus zwei vorzugsweise parallel und längs verlaufenden Heckholmen (18,19).

Die Holme (14,15,16,17,18,19) haben im Querschnitt eine abgewinkelte Form mit einem aufrechten Steg, an dessen oberen und unteren Rand seitliche Abkantungen oder Seitenflansche vorhanden sind, die üblicherweise auch als Ober- und Untergurt bezeichnet werden. Hierdurch ergibt sich die in Figur 8 gezeigte Z- oder S-Form. Die oberen Abkantungen bzw. Seitenflansche verlaufen horizontal und bieten eine ebene und zumindest weitgehend durchgängige Auflage für die Bodenplatte (3), mit der sie auch verschraubt oder auf andere Weise verbunden sind. Hierbei sind vorzugsweise alle Holme (14,15,16,17,18,19) mit der Bodenplatte (3) verschraubt. An den Deichselholmen (15,16) können abgewinkelte Beschläge (33) für eine zusätzliche Verbindung mit der Bodenplatte (3) befestigt sein.

Die drei Fahrgestellteile (5,6,7) sind untereinander längsverstellbar verbunden, wobei sie an den Verbindungsstellen (10,11) mit Überlappung aneinander geführt sind. Die Längsverstellung ist über ein Verstellraster mit jeweils einem Schraubregister (20) gegeben. Die einzelnen Schraubregister (20) haben hierbei jeweils nur eine einzelne horizontale längslaufende Schraubreihe.

Die Schraubregister (20) werden in an sich bekannter Weise von einer Reihe von Schraubbohrungen in den Stegen der Holme (14,15,16,17,18,19) gebildet, wobei die Stegwandung im Bohrungsbereich napfförmig ausprägt ist, um eine formschlüssige Verbindung zwischen den im Überlappungsbereich eng aneinander liegenden Holmen zu erzielen. Für die Sicherung der Schraubverbindung sind pro Verbindungsstelle (10,11) jeweils zwei oder drei Schrauben erforderlich.

Die Deichselholme (14,15) und die Mittelholme (16,17) und ggf. auch die Heckholme (18,19) haben über ihre Länge eine variable Steghöhe, die sich jeweils zu beiden Enden hin verjüngt. Figur 6 und 7 zeigen hierfür Ausführungsbeispiele. Durch die Verjüngungen kann Material gespart werden. Das Maximum (12) der Steghöhe liegt bei den Deichselholmen (14,15) im hinteren Drittel und ein kleines Stück vor dem Schraubregister (20). Im Bereich der Schraubregister (20) sind die Deichsel- und Mittelholme (14,15,16,17) verjüngt. Durch die Höhenbeschränkung der Schraubregister (20) auf nur eine Schraubreihe, die zudem nahe am Obergurt oder Seitenflansch der Stege angeordnet ist, lässt sich die Steghöhe in diesem Bereich stark verringern.

Das Maximum (13) der Steghöhe der Mittelholme (16,17) befindet sich im Bereich der Achsbefestigung. Die Verjüngungen werden durch eine in Seitenansicht im wesentlichen dreieckige Form der Holmunterkante gebildet. Die Holmoberkante und die dortigen Seitenflansche bzw. Obergurte verlaufen horizontal und gehen an den Verbindungsstellen (10,11) vorzugsweise weitgehend stufenfrei ineinander über.

Die Verbindungsstellen (10,11) und die Schraubregister (20) bieten verschiedene Verstellmöglichkeiten für die drei Fahrgestellteile (5,6,7). Wie Figur 1 und 2 verdeutlichen, lässt sich hierdurch einerseits die Gesamtlänge des Fahrgestells (4) verändern. Bei maximaler Überlappung an den Verbindungsstellen (10,11) ergibt sich eine minimale Fahrgestelllänge für kurze Aufbauten (2). Bei einer Vergrößerung der Auszugslänge und einer entsprechend kleineren Überlappung an den Verbindungsstellen (10,11) ergibt sich die in Figur 2 gezeigte größere Fahrgestelllänge für längere Aufbauten (2).

Die Achsposition in Längsrichtung kann sich dabei in der gezeigten Weise verändern und bei Verlängerung des Fahrgestells (4) nach hinten rutschen. Sie kann alternativ auch gleich bleiben.

Der Deichselüberhang und die freie vorstehende Deichsellänge sind hierbei vorzugsweise gleichbleibend. Der Aufbau (2) hat dadurch stets den gleichen Abstand vom Kupplungspunkt bzw. Zugkopf (9). Die Beschläge (33) können dann starr oder nur mit einer geringfügigen Längsverstellbarkeit über zwei oder drei Registerbohrungen an den Deichselholmen (14,15) befestigt werden.

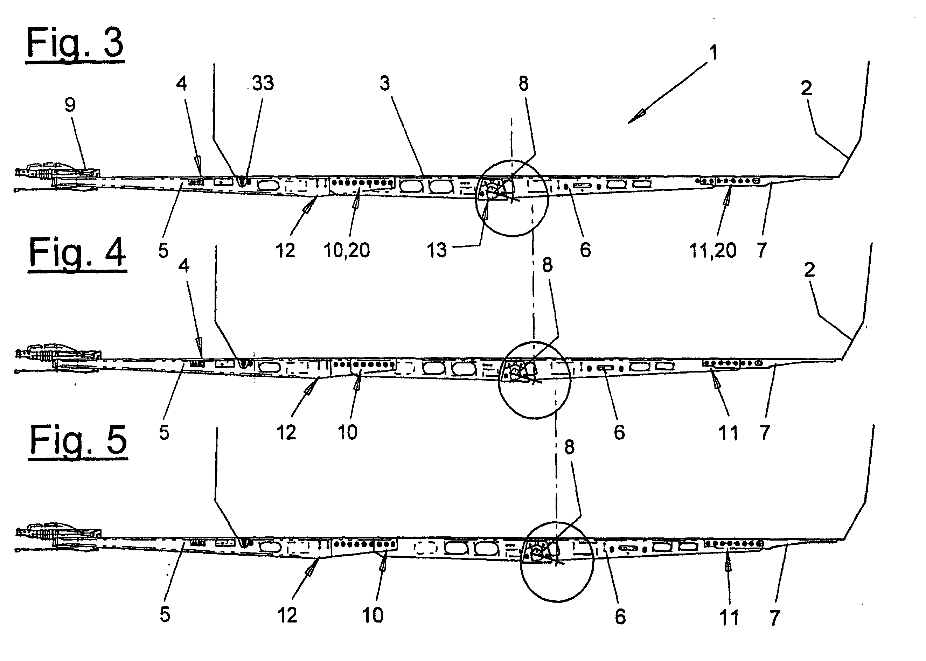

Wie Figur 3 bis 5 in einer Seitenansicht verdeutlichen, kann über die Verstellbarkeit der Fahrgestellteile (5,6,7) auch die Lage des Achsaggregates (8) bei gleichbleibender Aufbaulänge (2) verändert werden. Hierdurch kann unterschiedlichen Traglasten bzw. Achslasten und unterschiedlichen Lastverteilungen Rechnung getragen werden. Diese Traglasten können z.B. je nach Art und Umfang der Innenausstattung eines Wohnwagenaufbaus (2) variieren. Die Achsposition wird durch Verschiebung des Mittelteils (6) gegenüber dem Deichselteil (5) und dem Heckteil (7) erzielt. Die Achsverstellung kann auch mit einer Längsverstellung des Fahrgestells (4) kombiniert werden.

Figur 3 zeigt die vordere Stellung des Achsaggregates (8). Hierbei überlappen die Deichsel- und Mittelholme (14,15,16,17) an der Verbindungsstelle (10) auf großer Länge. Dafür ist die Überlappung an der hinteren Verbindungsstelle (11) zwischen den Mittelholmen (16,17) und den Heckholmen (18,19) kleiner. In der von Figur 4 verdeutlichten Mittelstellung ist das Mittelteil (6) weiter nach hinten verschoben, wobei die Überlappung an den vorderen Verbindungsstellen (10) verringert und an den hinteren Verbindungsstellen (11) vergrößert ist. Bei der in Figur 5 gezeigten hinteren Achsstellung ist entsprechend die Überlappung an der vorderen Verbindungsstelle (10) relativ klein und an der hinteren Verbindungsstelle (11) groß.

Wie Figur 6 und 7 in der Seitenansicht verdeutlichen, haben die Holme (14,15,16,17,18,19) eine Vielzahl von Öffnungen oder Aussparungen, die zum einen der Befestigung von Anbauteilen dienen und andererseits vor allem das Gewicht reduzieren. Figur 6 und 7 zeigen dabei auch zwei Fahrgestelle (4) mit unterschiedlichen Steghöhen. Das Fahrgestell (6) hat insgesamt eine größere Holmsteghöhe und auch größere Steghöhen an den Maxima (12,13). Es ist für größere Lasten ausgelegt. Die Steghöhen und Maxima (12,13) sind beim Fahrgestell (4) von Figur 7 geringer. Es ist dementsprechend bei gleicher Fahrgestelllänge und Längenverstellbarkeit für kleinere Traglasten ausgelegt. Mit diesen zwei Fahrgestellen (4) und den in Figur 1 bis 5 gezeigten Variationsmöglichkeiten können weitgehend alle Anhängerbaureihen von Einachs-Wohnwagenanhängern abgedeckt werden.

Die Holme (14,15,16,17,18,19) bestehen aus Metall, vorzugsweise aus gestanztem und gebogenem Stahlblech, das durch eine Verzinkung oder dergleichen gegen Korrosion geschützt ist. Das Fahrgestell (4) hat in der bevorzugten Ausführungsform keine metallischen Quertraversen. Es wird in Querrichtung über die Bodenplatte (3) und über das Achsaggregat (8) sowie den frontseitigen Zugkopf (9) stabilisiert.

Wie die verschiedenen Draufsichten von Figur 9, 11 und 13 zeigen, haben die Deichselholme (14,15) an den rückwärtigen Enden eine nach innen gerichtete Abkröpfung (21) zur Winkelanpassung und planen Parallellage mit den Mittelholmen (16,17) im Überlappungsbereich an den Verbindungsstellen (10). Hier befinden sich auch die Schraubregister (20). An den Schraubregistern (20) oder an einer anderen geeigneten Stelle können auch Stützen (34) ortsfest oder in Längsrichtung verstellbar befestigt sein. Eine ähnliche Anordnung und evtl. Verstellbarkeit ergibt sich auch für Stützen (34) im Heckbereich an den Heckholmen (18,19).

Die Bodenplatte (3) wird zur Gewichtsreduzierung möglichst dünn ausgebildet und besteht z.B. aus einer Sperrholzplatte. Sie ist an der Unterseite durch ein oder mehrere Bodenversteifungen (22) hinsichtlich Biegung und Verformung stabilisiert. Die Bodenversteifungen (22) sind leichtgewichtig ausgeführt und befinden sich zwischen den Mittel- und Heckholmen (16,17,18,19). Hierfür gibt es verschiedene Ausführungsformen.

Figur 8 zeigt im Querschnitt die Bodenplatte (3) mit einer Grundeinteilung eines Aufbaus (2) für Wohnwagen. An den seitlich überstehenden Längsrändern des Aufbaus (2) befinden sich auf beiden Seiten die Einbaubereiche (30), die Kücheneinbauten, Sanitäreinbauten und dergleichen aufnehmen. In diesen Einbaubereichen (30) ist die Bodenplatte (3) durch die dortigen Holme (14,15,16,17,18,19) abgestützt. Zwischen den Einbaubereichen (30) befindet sich der zentrale Bewegungsbereich (29) für die Personen im Wohnwagen, der durch die Bodenversteifungen (22) stabilisiert wird.

In der einfachen Ausführungsform von Figur 8 befindet sich in der Mitte der Bodenplatte (3) ein zentraler Längsträger (23) als Bodenversteifung, der z. B. als Winkel- oder U-Profil ausgebildet sein kann und an der Oberseite mit der Bodenplatte (3) und an der Unterseite mit der Achse (31) verbunden ist.

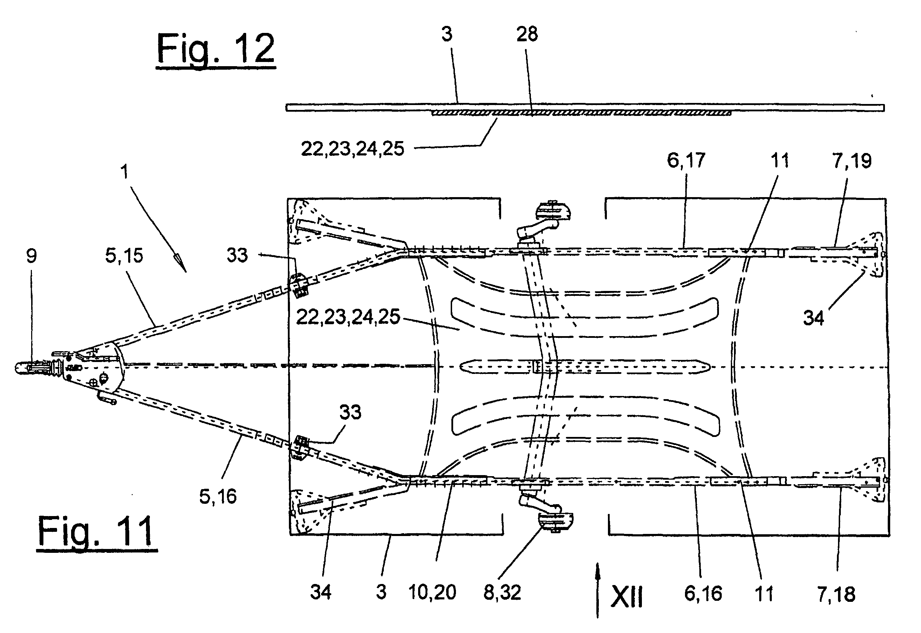

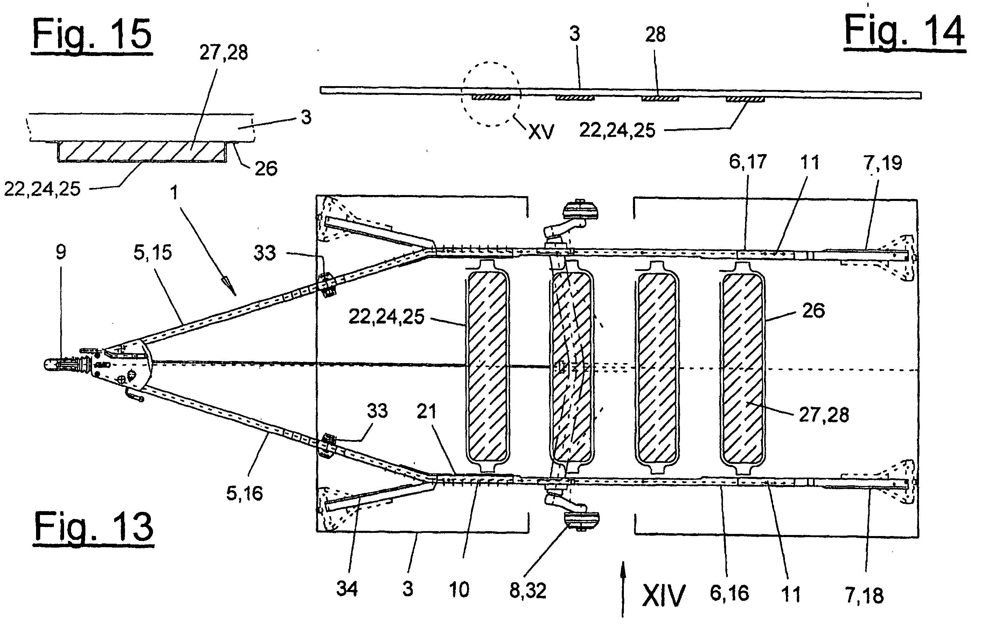

In der Ausführungsform von Figur 11 ist die Bodenversteifung (22) als ein einziges breitflächiges Formteil (25) ausgebildet, das sich etwa im Bereich der Mittelholme (16,17) befindet und dort einen Großteil der Bodenfläche überdeckt. Das Formteil (25) besteht vorzugsweise aus Kunststoff und kann als tiefgezogenes Hohlbauteil ausgebildet sein. Wie Figur 15 verdeutlicht, kann es an der Oberseite einen umlaufenden abgewinkelten Rand (26) aufweisen, der mit der Bodenplatte (3) verbunden wird. Diese Verbindung kann zur Optimierung der Tragfähigkeit und Bodenversteifung vollflächig oder zumindest weitgehend durchgängig linienförmig sein. Die Verbindung kann durch Kleben oder eine andere Flächenverbindung erfolgen. Das Formteil (25) kann bei der einteiligen Form von Figur 11 und 12 an der Unterseite nach unten und/oder oben gerichtete Wölbungen oder dergleichen zur Versteifung haben. Die hochstehenden Wölbungen können ebenfalls mit der Bodenplatte (3) zur Versteifung verbunden sein.

In der gezeigten Ausführungsform ist das Formteil (25) hohl. Sein Innenraum (27) ist mit einem leichtgewichtigen Isoliermaterial, z.B. einem Kunststoffschaum ausgefüllt. Dieser kann den Wagenboden nach unten wärmeisolieren und ggf. auch in gewissem Maße zur Bodenstabilisierung beitragen. In einer anderen nicht dargestellten Variante kann das Formteil (25) auch eine größere Tiefe besitzen und als Funktionsteil, z. B. als Tank für Frischwasser und/oder Abwasser ausgebildet sein. In diesem Fall sind geeignete Anschlüsse und Leitungen für die Zu- und Abfuhr der Flüssigkeiten vorgesehen.

In der Variante von Figur 9 und 10 sind mehrere Bodenversteifungen (22) in Form von hintereinander mit kurzen, gleichmäßigen Abständen angeordneten, parallelen Querträgern (24) vorgesehen. Diese Querträger (24) sind wiederum als leichtgewichtige hohle Formteile (25) aus Kunststoff ausgebildet und haben einen abgewinkelten Rand für eine möglichst flächige Verbindung mit der Bodenplatte (3). Der Hohlraum (27) kann auch hier mit einem Schaum (28) gefüllt sein. Der abgewinkelte Rand (26) ist bei der dargestellten Ausführungsform nur an den Längskanten der Formteile (25) vorhanden.

In der Variante von Figur 13 bis 15 sind ebenfalls Querträger (24) als Bodenversteifungen (22) vorhanden. Hierbei sind die Querträger (24) breiter als in Figur 9 und dafür in größeren Abständen angeordnet. In der Variante von Figur 13 haben die Formteile (25) einen an allen Seiten umlaufenden Rand (26), der an den quergerichteten Schmalseiten noch zusätzliche Vorsprünge aufweist.- Dieser außerdem zusätzlich verbreiterte Rand (26) lässt sich besonders gut mit der Bodenplatte (3) verbinden. Je größer die Verbindungsfläche und je gleichmäßiger und inniger die Verbindung zwischen Rand (26) und Bodenplatte (3) ist, desto besser werden die Biegekräfte und Momente in Längs- und Querrichtung aufgenommen und unerwünschten Bodenverformungen vorgebeugt.

Abwandlungen der gezeigten Ausführungsbeispiele sind in verschiedener Weise möglich. Zum einen können die Achsaggregate (8) anders ausgebildet sein und Tandemachsen sein. Ferner können die Mittelholme (16,17) statt der Parallellage leicht pfeilförmig schräg nach außen gestellt sein. Variabel ist ferner die Einzelgestaltung der Holme sowie der Verbindungsstellen (10,11) und der Schraubregister (20). Auch die Bodenversteifungen (22) können über die dargestellten Variationen hinaus abgewandelt werden.

### BEZUGSZEICHENLISTE

- 1: Fahrzeuganhänger, Wohnwagen
- 2: Aufbau
- 3: Boden, Bodenplatte
- 4: Fahrgestell
- 5: Fahrgestellteil, Deichsel
- 6: Fahrgestellteil, Mittelteil
- 7: Fahrgestellteil, Heckteil
- 8: Achsaggregat
- 9: Zugkopf
- 10: Verbindungsstelle Deichsel
- 11: Verbindungsstelle Heckteil
- 12: Maximum Steghöhe Deichsel
- 13: Maximum Steghöhe Mittelteil
- 14: Deichselholm
- 15: Deichselholm
- 16: Mittelholm, Längsholm
- 17: Mittelholm, Längsholm
- 18: Heckholm
- 19: Heckholm
- 20: Schraubregister, Verstellraster
- 21: Abkröpfung Deichselholm
- 22: Bodenversteifung
- 23: Längsträger
- 24: Querträger
- 25: Formteil hohl
- 26: abgewinkelter Rand
- 27: Innenraum
- 28: Schaum
- 29: Bewegungsbereich
- 30: Einbaubereich
- 31: Achse
- 32: Radnabe
- 33: Beschlag
- 34: Stütze

## Patentansprüche

1. Fahrgestell für einen Fahrzeuganhänger (1) mit einer starren V-förmigen Deichsel (5), mit einem Mittelteil (6) nebst einem Achsaggregat (8) und mit einem Heckteil (7), die von Holmen (14,15,16,17,18,19) gebildet werden, wobei die Deichselholme (14,15) und die Mittelholme (16,17) über die Länge eine variable Steghöhe aufweisen, die sich zu beiden Enden hin verjüngt, und das Heckteil (7) längsverschieblich am Mittelteil (6) mit Überlappung an Verbindungsstellen (11) geführt und mittels Schraubregistern (20) befestigt ist,
**dadurch gekennzeichnet,**
**daß** das Fahrgestell traversen frei ist und die Deichsel (5) längsverschieblich am Mittelteil (6) mit Überlappung an Verbindungsstellen (10) geführt und mittels Schraubregistern (20) befestigt ist.

2. Fahrgestell nach Anspruch 1, **dadurch gekennzeichnet, dass** das Maximum (12) der Deichselsteghöhe im hinteren Drittel der Deichsellänge vor den Schraubregistern (20) liegt.

3. Fahrgestell nach Anspruch 1 oder 2, **dadurch gekennzeichnet, dass** das Maximum (13) der Mittelholme (16,17) im Bereich des Achsaggregates (8) liegt.

4. Fahrgestell nach Anspruch 1, 2 oder 3, **dadurch gekennzeichnet, dass** das Achsaggregat (8) ortsfest am Mittelteil (6) angeordnet ist.

5. Fahrgestell nach einem der Ansprüche 1 bis 4, **dadurch gekennzeichnet, dass** das Achsaggregat (8) in der Längsposition durch Verschieben des Mittelteils (6) gegenüber der Deichsel (5) und dem Heckteil (7) veränderbar ist.

6. Fahrgestell nach einem der Ansprüche bis 5, **dadurch gekennzeichnet, dass** das Fahrgestell (4) eine Bodenplatte (3) zur Verbindung mit einem Aufbau (2) trägt, die mit allen Fahrgestellteilen (5,6,7) verbindbar ist.

7. Fahrgestell nach einem der Ansprüche 1 bis 6, **dadurch gekennzeichnet, dass** das Schraubregister (20) im Bereich der Stegverjüngung angeordnet ist und eine einzelne Schraubreihe aufweist.

8. Fahrgestell nach einem der Ansprüche 1 bis 7, **dadurch gekennzeichnet, dass** die Deichselholme (14,15) an den rückwärtigen Enden im Bereich der Schraubregister (20) eine Abkröpfung (21) zur Anpassung an die geraden längslaufenden Mittelholme (16,17) aufweisen.

9. Fahrgestell nach einem der Ansprüche 1 bis 8, **dadurch gekennzeichnet, dass** die dünne Bodenplatte (3) dünn und verformbar ausgebildet ist und an der Unterseite ein oder mehrere längsund/oder querverlaufende leichtgewichtige Bodenversteifungen (22) aufweist.

10. Fahrgestell nach einem der Ansprüche 1 bis 9, **dadurch gekennzeichnet, dass** die Bodenversteifung (22) als hohles Formteil (25) ausgebildet ist, dessen abgewinkelter Rand (26) unter Aufnahme der Biegekräfte zumindest weitgehend linienförmig oder flächig mit der Bodenplatte (3) verbunden ist.

11. Fahrgestell nach einem der Ansprüche 1 bis 10, **dadurch gekennzeichnet, dass** das hohle Formteil (25) als Funktionsteil, insbesondere als Tank ausgebildet ist.

12. Fahrgestell nach einem der Ansprüche 1 bis 10, **dadurch gekennzeichnet, dass** das Formteil (25) mit einem Schaumstoff gefüllt ist.

## Claims

1. Chassis for a car trailer (1) with a rigid V-shaped draw bar (5), with a centre-part (6) plus an axle unit (8) and with a rear part (7) formed from beams (14, 15, 16, 17, 18, 19), whereby the draw bar beams (14,15) and the middle beams (16, 17) have a variable beam height lengthwise, which reduces at both ends, and the rear part (7) is movable longitudinally at the centre part (6) with overlapping at the junctions (11) and is fastened with screw registers (20), **characterized in that** the chassis has no cross pieces and the draw bar (5) overlaps at the junctions (10) and is fastened by means of screw registers 20).

2. Chassis according to Claim 1, **characterized in that** the maximum (12) of the draw bar beams is in the rear third of the beam length before the screw registers (20).

3. Chassis according to Claim 1 or 2, **characterized in that** the maximum (13) of the centre beams (16, 17) is within the range of the axle unit (8).

4. Chassis according to Claim 1, 2 or 3, **characterized in that** the axle unit (8) is fixed to the centre part (6).

5. Chassis according to one of Claims 1 to 4, **characterized in that** the axle unit (8) can be changed in longitudinal position by moving the centre part (6) against the draw bar (5) and the rear part (7).

6. Chassis according to one of Claims 1 to 5, **characterized in that** the chassis (4) has a floor plate (3) for connecting with a body (2) that can be connected to all parts of the chassis (5, 6, 7).

7. Chassis according to one of Claims 1 to 6, **characterized in that** the screw register 20) is arranged at the narrowing of the beam height and has a single row of screws.

8. Chassis according to one of Claims 1 to 7, **characterized in that** the draw bar beams (14, 15) at the rear end in the area of the screw register (20) have an offset (21) to adapt to the straight, longitudinal middle beams (16, 17).

9. Chassis according to one of Claims 1 to 8, **characterized in that** the thin floor plate (3) is made thin and deformable and has underneath one or more longitudinal and/or transverse, lightweight floor reinforcements (22).

10. Chassis according to one of Claims 1 to 9, **characterized in that** the floor reinforcement (22) is made as a hollow moulding (25), the rounded edge (26) of which on taking the bending forces is linked at least largely linearly or flush with the floor plate (3).

11. Chassis according to one of Claims 1 to 10, **characterized in that** the hollow moulding (25), is made as a functional part, as particularly as a tank

12. Chassis according to one of Claims 1 to 10, **characterized in that** the moulding (25) is filled with a foamed material.

## Revendications

1. Châssis pour une remorque (1) de véhicule automobile comprenant une barre d'attelage (5) rigide en fonce de V, une partie (6) médiane, outre un groupe (8) à essieux et une partie (7) arrière qui sont formées de barres (14, 15, 16, 17, 18, 19), les barres (14, 15) de barre d'attelage et les barres (16, 17) médianes ayant une hauteur de cloison variable sur la longueur qui diminue vers les deux extrémités, et la partie (7) arrière est guidée à coulissement longitudinal par rapport à la partie (6) médiane avec chevauchement en des points (11) de liaison et est fixée au moyen de registres (20) de vis,
**caractérisé en ce que** le châssis n'a pas de traverse et la fourche d'attelage (5) est guidée à coulissement longitudinal par rapport à la partie (6) médiane avec chevauchement en des points (10) de liaison et est fixée au moyen de registres de vis.

2. Châssis suivant la revendication 1, **caractérisé en ce que** le maximum (12) de la hauteur de paroi de la barre d'attelage se trouve dans le tiers arrière de la longueur de la barre d'attelage avant les registres (20) de vis.

3. Châssis suivant la revendication 1 ou 2, **caractérisé en ce que** le maximum (13) de la hauteur (16, 17) moyenne est dans la zone du groupe (8) à essieux.

4. Châssis suivant la revendication 1, 2 ou 3, **caractérisé en ce que** le groupe (8) à essieux est monté à poste fixe sur la partie (6) médiane.

5. Châssis suivant l'une des revendications 1 à 4, **caractérisé en ce que** la position longitudinale du groupe (8) à essieux peut être modifiée par coulissement de la partie (6) médiane par rapport à la fourche d'attelage (5) et à la partie (7) arrière.

6. Châssis suivant l'une des revendications 1 à 5, **caractérisé en ce que** le châssis (4) porte une plaque (3) de fond de liaison à une structure (2) qui peut être assemblée à toutes les parties (5, 6, 7) du châssis.

7. Châssis suivant l'une des revendications 1 à 6, **caractérisé en ce que** le registre (20) de vis est disposé dans la région de la diminution de la paroi et a une seule rangée de vis.

8. Châssis suivant l'une des revendications 1 à 7, **caractérisé en ce que** les barres (14, 15) de la barre d'attelage ont sur les extrémités arrière, dans la zone du registre (20) à décalage, un coude (21) d'adaptation à la barre (16, 17) médiane rectiligne s'étendant longitudinalement.

9. Châssis suivant l'une des revendications 1 à 8, **caractérisé en ce que** la mince plaque (3) de fond est mince et déformable et a sur la face inférieure un ou plusieurs renforts (22) de fond de poids léger et s'étendant longitudinalement et/ou transversalement.

10. Châssis suivant l'une des revendications 1 à 9, **caractérisé en ce que** le renfort (22) de fond est constitué sous la forme d'une pièce (25) creuse façonnée dont le bord (25) coudé est assemblé avec absorption des forces de flexion au moins dans une grande mesure linéairement ou en surface à la plaque (3) de fond.

11. Châssis suivant l'une des revendications 1 à 10, **caractérisé en ce que** la pièce (25) creuse façonnée est constituée en pièces fonctionnelles, notamment en réservoir.

12. Châssis suivant l'une des revendications 1 à 10, **caractérisé en ce que** la pièce (25) façonnée est emplie de matière mousse.
